# EUROPEAN PATENT APPLICATION

(11) **EP 4 183 950 A1**
(43) Date of publication of application: **24.05.2023**
(21) Application number: 21841694.9
(22) Date of filing: 15.07.2021
(51) Int. Cl.: E04F 21/08

(54) **LEVELLING TOOL**

(30) Priority: 17.07.2020 ES 202031576 U
(71) Applicant: Evolution Construction System, S.L., 35502 Las Palmas (ES)
(72) Inventor: LORENZO PELLICO, Daniel, 35502 Las Palmas (ES); TRIGO GIRARDI, Vitor, 35502 Las Palmas (ES)
(74) Representative: Espiell Gomez, Ignacio
(86) International application number: PCT/ES2021/070525
(87) International publication number: WO 2022/013476

(57) **Abstract**

Levelling tool that, applicable for depositing a material in fluid state on the surface of a wall or floor, evenly distributing and levelling that comprises a supporting structure (2) in which levelling and finishing means (3, 3', 3") are coupled, having a variable shape, in addition, distributing means (4) such as a helical screw or canal existing in the said supporting structure (2) located between , at least, a material input pipeline (5) and the levelling and finishing means (3,3',3"), that are distributing the material along the full extent of the said means, such as a rule (3), a compaction roller (3') or a levelling roller (3").

## Description

### OBJECT OF THE INVENTION

The invention, as stated in the title of this specification, refers to a levelling tool contributing to the function to which it is designed with advantages and characteristics that are disclosed in detail thereafter.

The object of this invention refers to a tool that, preferably devised for being coupled to a robotic arm or the like, is used positioning it facing a wall or floor serving in order that a coating material in fluid state, for example, plaster or cement , is evenly deposited on the surface of the said wall or floor, providing it an accurate and leveled finish, improving the manual systems currently used for that same purpose,

### FIELD OF APPLICATION OF THE INVENTION

The field of application of this invention is within the sector of the industry engaged in the manufacture of tools for construction, particularly focusing in the field of levelling tools.

### BACKGROUND OF THE INVENTION

As it is known, in the field of construction, it is usual to have the need of placing coatings of a fluid material, for example, plaster or cement, on a wall or a floor, which has to be perfectly distributed and levelled in order to achieve a completely flat coating finish.

For this, up to now, sheet-plate-shaped or rule-shaped manual tools are usually used that the operator is passing on the material until it becomes flat.

However, especially when it is dealt with large surfaces, it is very difficult to achieve a perfect result and, in addition, it means a hard manual work.

The objective of this invention therefore is to overcome that problem by developing a specific tool that facilitates the said task allowing, in addition, that it can be incorporated to a robot for its handling.

In this sense, it can be pointed out that the applicant himself is the holder of two patents referring to robotized systems of the said type in which the tool of this invention can be used. Concretely, the patent ES2726918A1, referring to a "Robot for restoring and rehabilitating" buildings and the patent ES2726921 A1, referring to a "System of robotized construction".

On the other hand, and as reference to the current state-of-the-art, it shall be pointed out that, at least the applicant is not aware of the existence of any other levelling tool that presents technical and structural characteristics same or similar to those the herein claimed possesses.

### EXPLANATION OF THE INVENTION

The levelling tool that the invention proposes is configured as the suitable solution to the above-mentioned objective, the characterizing details making it possible and that duly distinguish it appearing in the final claims attached to this description.

Concretely, what the invention proposes, as it was said before, is a tool used in the field of construction for depositing and distributing in an even and level manner a material in fluid state, for example plaster or cement, on the surface of a wall or floor.

For this, and more specifically, the tool essentially comprises a supporting structure in which levelling and finishing means are coupled , having a variable shape, depending on whether the surface on which it is applied is vertical or horizonal and depending on the finish sought to be given to the material to be levelled and that anyway has available , in addition, distributing means located close to an input pipeline from which the material is incorporated propelled by means of a device to which normally a pump is connected with which it is being distributed along its full length.

With this, the tool is used positioning it facing a wall or a floor and it makes that the material is evenly deposited on the surface of the said wall or floor and providing it an accurate finish.

Preferably, that the distribution means the structure of the tool possesses between the rule and the pipeline consists in a helical screw as it constitutes a system that assures that the material is evenly distributed on the surface of the rule and that this way the material remains perfectly deposited on the surface (wall or floor) involved. For this, in addition, the said screw, preferably, presents a symmetrical toothing, that means, oriented towards two sides in each of its two halves, so that the material is evenly sprinkled towards both sides thereof.

On its part, the levelling and finishing means, in an embodiment of the tool, preferably designed for use in the levelled application of material on walls and vertical surfaces, can be defined by a rule, normally consisting in a piece of sheet plate having a variable shape, depending on the finish it is wished to give to the surface of the material to be placed,

And, in another embodiment, preferably designed for use in the levelled application of material on floors and horizontal surfaces, the levelling and finishing means can be defined by one or more compaction rollers, without the additional inclusion of the rule is discarded.

Anyway, the said rule can have different shapes, based on the format or finish it is wished that the material adopts.

With this, the material is deposited on the wall or floor, being levelled with the given format thanks to the pressure exerted by the rule or roller between itself and the supporting structure. This pressure and the thickness of the material deposited shall be determined by the distance from the rule or roller to the surface of the wall or floor, which, preferably, is adjustable.

The tool can be coupled to a robotic arm or the like in order that the positioning is mechanized and accurate, making that the finish obtained has a higher quality than the manual systems.

Optionally, the tool can comprise, as distribution means alternative to the said helical screw placed at the arrival of the pipeline, other types of system for the distribution of the material in the levelling and finishing means, anyway located between them and the arrival of the pipeline. Thus:
- A thin and elongated space where the material is compressed by the pressure exerted in the pumping and where compressed air is injected that propels it through the output towards the support and remains glued.
- A correlation of longitudinal sheet plates, arranged so that they create a circuit that makes that the material is evenly distributed.
- An arrangement of multiple pipelines through which the material is distributed until reaching the rule.
- The material arriving from a lower part and being raised through a conveyer belt with inclined blades towards the ends in order that the material is being distributed as it raises.

Anyway, the rule is coupled to the supporting structure of the tool so that it can be moved independently of it, as well lengthwise and crosswise or in both senses at same time and/or even rotating.

Last, it shall be stated that, optionally, the tool possesses wheels in the supporting structure to sustain it on the surface of the wall or floor on which the material is to be placed and to be able to guide its movement without interfering in the material positioning.

### DESCRIPTION OF THE DRAWINGS

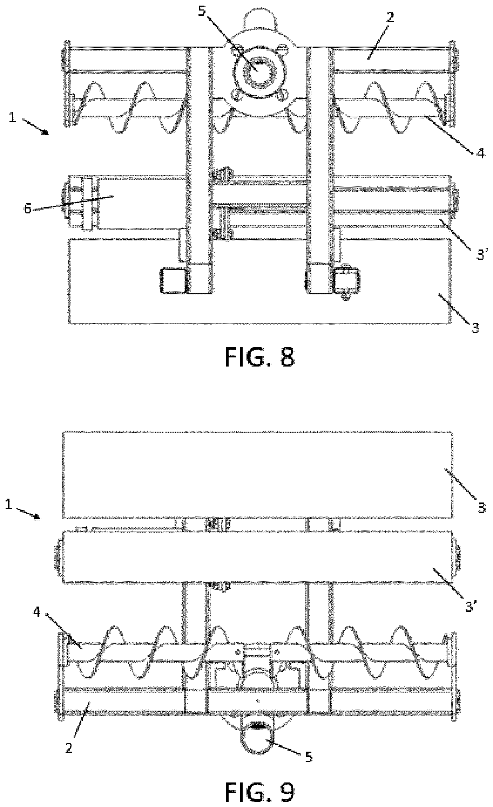

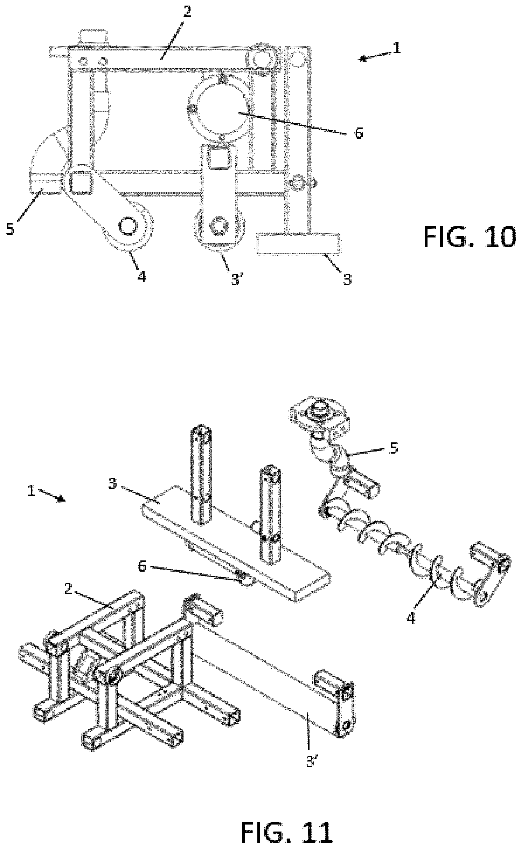

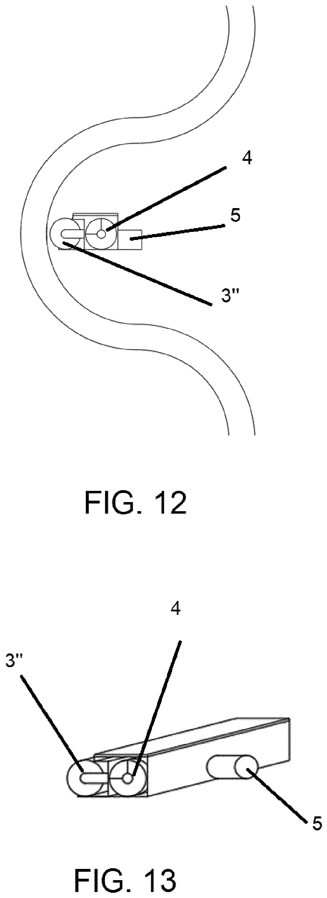

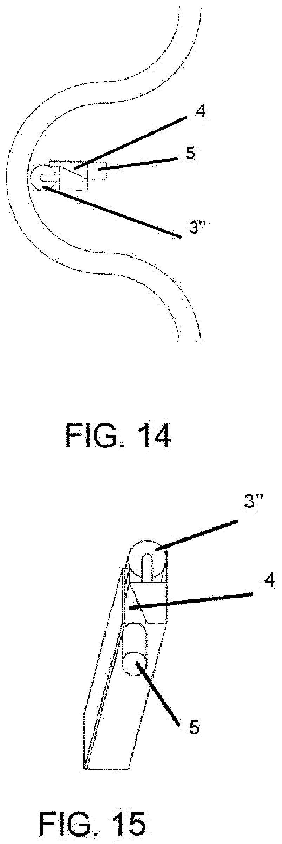

To complement the description being carried out and in order to assist to best understand the characteristics of the invention, attached to this specification, as an integral part thereof, there is a set of drawings in which, for illustration and no limitation purpose, the following has been represented:
The figures numbers 1 and 2.- They show both top perspective views, front and back, respectively, of a first example of preferred embodiment of the levelling tool object of the invention, concretely an example applicable for use in vertical, the general configuration of it can be seen once assembled.
the figures numbers 3 and 4.- They show perspective views, in this case, taken from a lower point of view and also from a front angle and another rear angle, respectively, of the example of the levelling tool, according to the invention, shown in the preceding figures, the rest of the essential elements it comprises can be seen;
the figure number 5.- it shows a perspective view of the exploded levelling tool of the invention, in this case, each of its main parts can be seen;

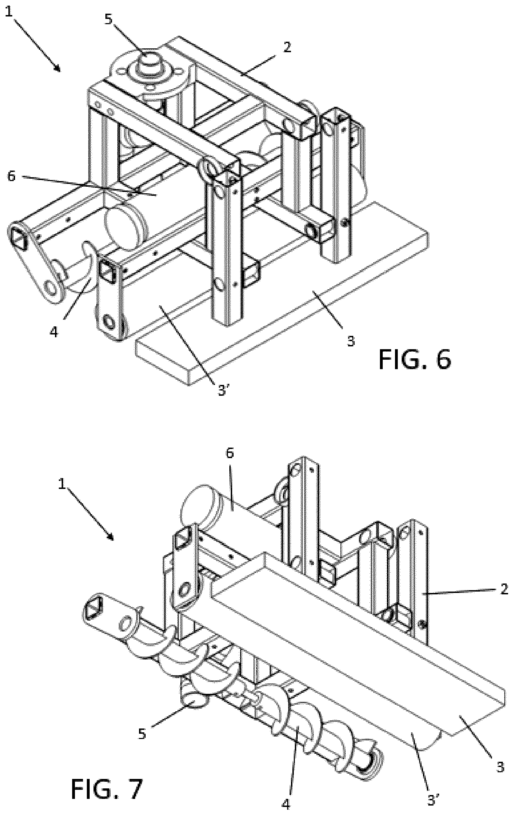

the figures 6 and 7.- They show both views, in top and lower perspective, respectively, of a second example of embodiment of the levelling tool object of the invention, in this case an example applicable for use in horizontal, its general configuration can be seen;
the figures number 8 and 9.- They show both views, in top and lower plan, respectively, of the example of the variant of horizontal use of the tool shown in the figures 6 and 7;
the figure number 10.- it shows a side elevation view of the example of the tool shown in the figures 6 to 9; and
the figure number 11.-It shows a perspective view of the exploded tool of the invention, according to an example shown in the figures 6 to 10.
the figure number 12.- it shows a profile view of a vertical surface that presents a curvature in its vertical axis where the levelling tool shall be placed in horizonal position.
the figure number 13.- it shows a perspective view of the levelling tool appearing in the figure 12 that comprises a levelling roller designed for its use on curved surfaces.
the figure number 14.- it shows an elevation view of a vertical surface that presents a curvature in its horizontal axis where the levelling tool shall be placed in vertical position.
the figure number 15.- it shows a perspective view of the levelling tool appearing in the figure 14 that comprises a levelling roller designed for its use in curved surfaces and the material input pipeline located at the top part of the tool when this later is placed in vertical position.

### PREFERRED EMBODIMENT OF THE INVENTION

Seen the said figures, and according to the numerals adopted, a non-limiting example of embodiment of levelling tool of the invention can be seen, which comprises what is described in detail below.

As it can be seen in the said figures, the tool (1) of the invention, applicable for depositing material in fluid state on the surface of a wall or floor evenly distributing and evenly levelling it, essentially comprises, a supporting structure (2) in which levelling and finishing means are coupled (3, 3',3"), having a variable shape, in addition, distributing means (4) exist located in the said supporting structure (2) between , at least, a material input pipeline (5) and the levelling and finishing means (3,3',3"), that are distributing the material along the full extent of the said means, so that, when exerting pressure with the supporting structure (2) on the material through the levelling and finishing means (3, 3', 3"), the material is being deposited and leveled on the said surface with the finish in function of their shape.

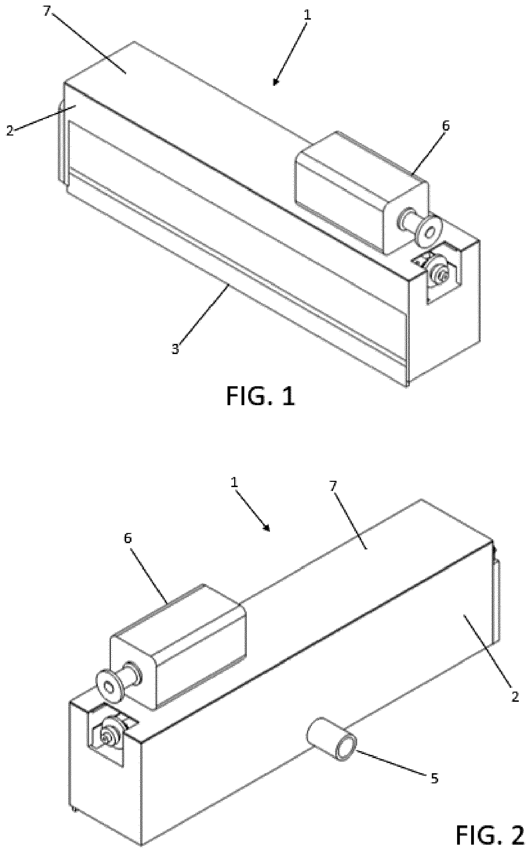

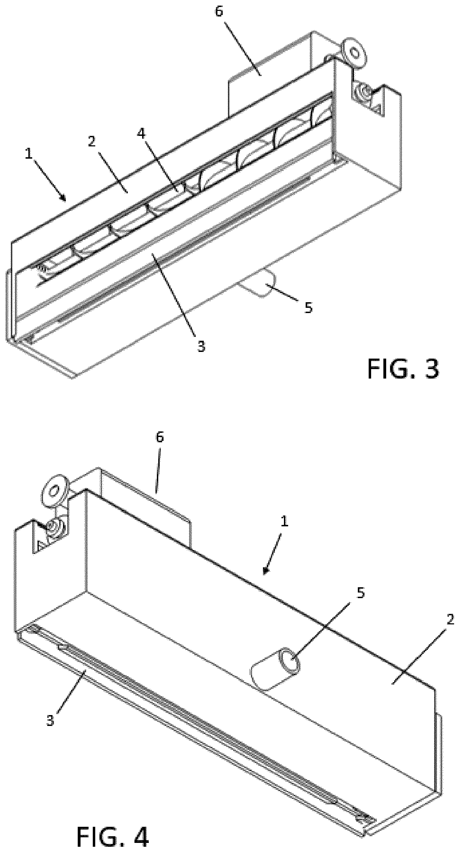

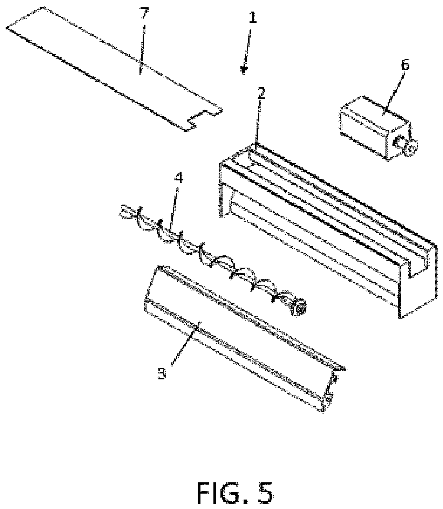

According to the figures 1 to 5, it can be seen how, in an embodiment, preferably applicable for use on vertical surfaces, the levelling and finishing means comprise at least a rule (3).

And, according to the figures 6 to 12, it can be seen how, in another embodiment, applicable for use in horizontal surfaces, the levelling and finishing means comprise, at least, a compaction roller (3').

In addition, in the said embodiment, applicable for use in horizontal surfaces, the levelling and finishing means comprise, in addition, also a rule (3). Anyway, the rule (3) is a piece of sheet plate having a variable shape depending on the finish it is sought to the surface of the material to be placed.

Preferably, the rule (3) or the compaction roller (3') has an adjustable position to be able to vary the distance with the surface of the wall or floor, because the material is deposited on the wall or floor and leveled with the format of the rule (3) or roller (3') thanks to the pressure exerted by it between itself and the supporting structure (2), so that the said pressure and the thickness of the material deposited shall be determined by the distance of the rule (3) or roller (3') to the surface of the wall or floor.

Thus, preferably, the rule (3) is coupled to the supporting structure (2) so that it can be moved with respect to it, as well lengthwise as crosswise, in both senses at the same time and/ or rotating. Preferably, the material is propelled with pressure through the input pipeline (5) by means of a device such as a pump (6), which, preferably, is incorporated externally to the supporting structure (2).

Preferably, the material distributing means (4) that the supporting structure (2) possesses between the rule (3) and the input pipeline (5) consists of a helical screw.

Preferably, the said helical screw (4) shows a symmetric toothing, that means, oriented towards opposite sides on each of its two halves.

Preferably, the supporting structure (2) of the tool (1) possesses anchoring means (not represented) for coupling it on a robotic arm or the like.

Optionally, the supporting structure (2) of the tool (1) possesses wheels (not represented) to sustain it on the surface of the wall or floor on which the material is to be placed and guiding its movement without interfering in the material depositing and levelling.

Likewise, it shall be pointed out that, in the embodiment of the tool (1) of the invention applicable for vertical surfaces, appearing in the figures 1 to 5, the supporting structure (2) is constituted by a set of metallic profiles and comprises a top lid (7) that serves to avoid that the material is shifted and a lower lid (not represented but similar to the top lid) in order that the material does not fall down the floor.

In addition, the tool can possess side lids (not represented), that can form different angles with the wall or the floor and that fulfil the function of limiting the passage of material outside the lateral limits of the tool, of creating a given finish in the material and/or to homogenize the joints between the different layers of material deposited and leveled on the wall or the floor.

On its part, in a preferred embodiment of the tool (1) of the invention applicable for horizontal surfaces, appearing in the figures 6 to 11, the supporting structure (2) is likewise constituted by a set of metallic profiles, although in this case the existence of top and lower lids is not required, although they could be included, but the lateral lids do exist.

In an alternative embodiment, specially designed for levelling vertical surfaces that show a curvature, the levelling and finishing means (3, 3', 3") comprise a roller that allows that the levelling tool has access level to the surface to be levelled without the tool hitting the surface due to its curvature.

In the case that the vertical surface shows a curvature in its vertical axis, the levelling tool shall be placed in horizontal position, as it is shown in the figure 12 and shall preferably be driven to carry out vertical up to down passes.

In case that the vertical surface shows a curvature in its horizontal axis, the levelling tool shall be placed in vertical position, as it appears in the figure 14, and shall be preferably driven to carry out horizontal passes starting from the top part of the surface and finishing on the lower part of the surface. In this embodiment, the material input pipeline (5) in the levelling tool is preferably placed on the top part of the tool, as it appears in the figure 15 and thanks to the gravity and to a canal existing within the tool, that are the distributing means (4), the material shall be distributed along the tool before exiting from it and be deposited on the surface thanks to the levelling and finishing means (3, 3', 3") preferably consisting in a roller. In case that the material input pipeline (5) in the levelling tool is not on the top part, a helical screw or similar shall be necessary that raises the material and distributes it along the tool before exiting from it and be deposited on the surface thanks to the levelling and finishing means (3, 3', 3") preferably consisting in a roller.

Sufficiently disclosed the nature of this invention, as well as the manner of implementing it, it is not deemed necessary to extend anymore its explanation in order that any person skilled in the art understands its extends and the advantages arising from it.

## Claims

1. Levelling tool that, applicable for depositing a material in fluid state on the surface of a wall or floor, evenly distributing and levelling it is **characterized in that** it comprises a supporting structure (2) in which levelling and finishing means (3, 3', 3") are coupled, having a variable shape, in addition, distributing means (4) existing in the said supporting structure (2) located between , at least, a material input pipeline (5) and the levelling and finishing means (3,3',3"), that are distributing the material along the full extent of the said means.

2. Levelling tool according to the claim 1, **characterized in that** the levelling and finishing means comprise, at least, a rule (3).

3. Levelling tool according to the claim 2, **characterized in that** the rule (3) is a piece of sheet plate having a variable shape.

4. Levelling tool according to the claim 2 or 3, **characterized in that** the rule (3) has an adjustable position to be able to vary the distance with the surface of the wall or floor.

5. Levelling tool according to any of the claims 2 to 4 **characterized in that** the rule (3) is coupled to the supporting structure (2) so that it can be moved independently of it, as well lengthwise and crosswise or in both senses at same time and/or even rotating.

6. Levelling tool according to the claim 1, **characterized in that** the levelling and finishing means comprise, at least, a compaction roller (3').

7. Levelling tool according to the claim 6, **characterized in that** the compaction roller (3') has an adjustable position to be able to vary the distance with the surface of the floor.

8. Levelling tool according to the claim 1, **characterized in that** the levelling and finishing means comprise, at least, a compaction roller (3') and a rule (3).

9. Levelling tool, according to any of the preceding claims, **characterized in that** the material is propelled with pressure through the input pipeline (5) by means of a device such as a pump (6).

10. Levelling tool according to the claim 9, **characterized in that** the said pump (6) is incorporated externally to the supporting structure (2).

11. Levelling tool, according to any of the preceding claims, **characterized in that** the distributing means (4) of the material consists in a helical screw.

12. Levelling tool, according to the claim 11, **characterized in that** helical screw (4), presents a symmetrical toothing, that means, oriented towards two opposite sides in each of its two halves.

13. Levelling tool, according to any of the preceding claims, **characterized in that** the supporting structure (2) possesses anchoring means for coupling it on a robotic arm or the like.

14. Levelling tool, according to any of the preceding claims, **characterized in that** the supporting structure (2) possesses wheels to sustain it on the surface of the wall or floor on which the material is to be placed and to be able to guide its movement without interfering in the material positioning and levelling.

15. Levelling tool, according to any of the preceding claims, **characterized in that** the levelling and finishing means comprise, at least, a levelling roller (3").

16. Levelling tool, according to any of the preceding claims, **characterized in that** in case of being used in vertical position, the material input pipeline (5) in the levelling tool is placed on the top part of the tool and thanks to the gravity and to a canal existing within the tool, the material shall be distributed along the tool before exiting from the tool and be deposited on the surface thanks to the levelling and finishing means (3, 3', 3").
